# FASCICULE DE BREVET EUROPEEN

(11) **EP 3 682 141 B1**
(45) Date de publication et mention de la délivrance du brevet: **15.02.2023**
(21) Numéro de dépôt: 18782117.8
(22) Date de dépôt: 12.09.2018
(51) Int. Cl.: F16H 1/28

(54) **PIVOT POUR PALIER LISSE ET UN PROCÉDÉ DE RÉALISATION DU PIVOT**
DREHPUNKT FÜR EIN GLEITLAGER UND VERFAHREN ZUR HERSTELLUNG
PIVOT FOR A PLAIN BEARING AND METHOD OF MANUFACTURING

(30) Priorité: 12.09.2017 FR 1758422
(43) Date de publication de la demande: 22.07.2020
(73) Titulaire: Safran Transmission Systems, 92700 Colombes (FR)
(72) Inventeur: LEMOINE, Julie, Marie, Renée, 77550 Moissy-Cramayel (FR); DOMBEK, Alexis, Claude, Michel, 77550 Moissy-Cramayel (FR); PAP, Balint, 77550 Moissy-Cramayel (FR)
(74) Mandataire: Ernest Gutmann - Yves Plasseraud S.A.S.
(86) Numéro de dépôt international: PCT/FR2018/052237
(87) Numéro de publication internationale: WO 2019/053374

(56) Documents cités:
- EP-A1- 2 607 695
- WO-A1-2016/149814
- FR-A1- 2 991 421

## Description

La présente invention concerne un pivot à palier lisse et un train d'engrenages, notamment pour une turbomachine à gaz pour aéronef, équipé d'au moins un tel pivot.

Dans la présente demande :
- axial a pour sens parallèle à l'axe (X) de rotation autour duquel sont montées rotatives des aubes de la turbomachine en cause,
- radial a pour sens perpendiculaire à l'axe X,
- circonférentiel a pour sens s'étendant autour de l'axe X,
- extérieur et intérieur (ou externe et interne) ont respectivement pour sens radialement extérieur et radialement intérieur par rapport à l'axe X,
- évidement a pour synonyme échancrure, encoche, découpe, cavité, creux. Il s'agit d'un espace sans matière.

L'application à un train d'engrenages, y compris épicycloïdal, est notamment visée, qui comprend une couronne extérieure et des pignons satellites en prise avec un pignon central et avec la couronne extérieure et montés chacun libre en rotation sur un porte-satellites, les pignons satellites pouvant chacun tourner autour d'un axe de satellite par l'intermédiaire d'un pivot.

Parmi les trains d'engrenages épicycloïdaux sont notamment concernés :
- ceux dans lesquels la couronne extérieure est mobile en rotation (montage également appelé train réducteur épicycloïdal),
- mais aussi, ceux dans lesquels le porte-satellites est fixe et la couronne extérieure est mobile (montage également appelé train réducteur planétaire).

Le porte-satellite peut donc être fixe ou pivotant autour de l'axe du planétaire interne et du planétaire externe. L'entrée peut être formée par le planétaire interne, et la sortie par le porte-satellite.

Dans une turbomachine, des trains épicycloïdaux sont ainsi notamment utilisés pour réduire la vitesse de rotation du rotor de la soufflante, indépendamment de la vitesse de rotation de la turbine.

Le document FR 2991421 décrit un tel réducteur à train épicycloïdal, dans lequel les roues dentées formant les satellites sont montées sur des pivots du porte-satellite par l'intermédiaire de paliers lisses, ce qui est favorable en termes d'encombrement et de poids. Les paliers lisses ont une durée de vie quasiment infinie, pour autant qu'ils soient constamment alimentés avec une huile ne comportant pas de particules abrasives.

Cette sensibilité à la lubrification implique un contrôle de la déformée du palier côté pivot et de sa température en fonctionnement.

Or, lors de calculs TEHD (thermo-élasto-hydro-dynamique) sur un pivot pour palier lisse conventionnel, il a été observé un échauffement de la surface active du pivot (surface radialement extérieure formant une partie du palier une fois le pivot monté entre le satellite et le porte-satellite), notamment dans une zone située circonférentiellement juste en amont du passage, tel qu'une fente, d'alimentation en huile ménagé dans ladite surface active de ce pivot.

Il a été également observé des désalignements non identiques entre les portées amont et les portées aval de différents pivots. Des déplacements tangentiels, dus aux couples appliqués, et/ou radiaux, dus à la force centrifuge, et non symétriques entre l'amont et l'aval le long de l'axe de rotation X, ont été constatés sur des pivots.

Tout ceci est dommageable car susceptible d'affecter la fiabilité du pivot et l'efficacité du palier, même en considérant EP2607695A1 et WO2016149814A1 qui définissent aussi l'art antérieur.

L'invention a notamment pour but d'apporter une solution simple, efficace et économique à une partie au moins de ces problèmes.

A cet effet, elle propose un pivot (appelé aussi arbre) pour palier lisse de train d'engrenages, le pivot présentant :
- une partie formant un fût central, s'étendant autour d'un passage axial du pivot, et
- des rainures circonférentielles axialement opposées, ouvertes axialement (donc latéralement, procurant ainsi une souplesse au pivot) qui séparent radialement, de deux parties latérales en porte-à-faux du pivot, deux parties extrêmes latérales axialement opposées du fût central,
le pivot étant caractérisé en ce que l'une au moins des parties latérales en porte-à-faux est creusée par au moins un évidement.

En prévoyant ainsi un creux, un vide, sur une partie au moins de l'une au moins des zones de souplesse formées par les parties latérales en porte-à-faux, on va modifier la répartition de la matière dans le pivot par rapport à un pivot à parties latérales en porte-à-faux uniformément pleines et identiques circonférentiellement, étant rappelé que ces zones de souplesse circonférentielles permettent de diminuer la rigidité du pivot afin de limiter le désalignement entre la surface active du pivot et ses portées.

Or il s'est avéré que le besoin de souplesse n'est pas nécessaire dans toutes les directions. Il est donc possible de faire varier localement la rigidité de ses zones de souplesse, en particulier dans les endroits à fort échauffement, afin d'augmenter la conduction et ainsi diminuer la température de la zone active, sans pour autant altérer la qualité de l'alignement précité. Il a en effet été constaté qu'une cause de l'augmentation locale précitée de la température était liée à une présence d'air emprisonné en zone de souplesse. La solution proposée remédie à cela. L'absence de matière limite la conduction de la chaleur et donc l'évacuation des calories.

Des essais et mesures ayant confirmé qu'on pouvait même supprimer localement la déformation prédéterminée du pivot assurée par les zones précitées de souplesse, il est même proposé:
- que, du côté latéral dudit au moins un évidement, ladite partie latérale en porte-à-faux soit circonférentielle mais non annulaire, et/ou
- que ledit au moins un évidement soit présent à l'interface entre un pignon satellite et le pivot considéré, sur la surface lisse du pivot qui définit la surface circonférentielle extérieure de ce pivot.

Afin de favoriser notamment encore davantage les transferts thermiques et l'efficacité dans l'effet anti-désalignement, il est par ailleurs conseillé que le pivot précité soit monobloc, avec ses parties latérales en porte-à-faux et son fût central en une seule pièce.

Et pour optimiser la diminution attendue de température de la zone active, sans pour autant altérer la qualité de l'alignement précité, il est proposé que :
- ledit au moins un évidement présente un contour irrégulier, et/ou
- que, du côté latéral de cet évidement :
   -- la rainure circonférentielle présente, à l'écart dudit au moins un évidement, au moins une profondeur (P) dans une direction suivant laquelle la rainure circonférentielle s'étend vers l'intérieur du pivot, depuis une extrémité latérale libre de ladite partie latérale en porte-à-faux, jusqu'à une extrémité de fond, et
   -- que ledit évidement s'étende alors sur au moins 10% de la circonférence du pivot et/ou de ladite profondeur (P) de la rainure circonférentielle.

Répartir ce contrôle de température de la zone active du pivot, en prévoyant que le pivot comprenne au moins deux évidements creusés respectivement dans l'une et l'autre des deux parties latérales en porte-à-faux, permettra d'élargir la zone à température plus basse et donc équilibrer les contraintes, quitte à ce que les évidements de part et d'autre soient différents.

Concernant maintenant le train d'engrenages, notamment pour turbomachine à gaz d'aéronef, auquel se rapporte aussi l'invention, il prévu qu'il comprenne une couronne extérieure et des pignons satellites, en prise avec le pignon central et avec la couronne extérieure et montés chacun libre en rotation sur un porte-satellites les pignons satellites pouvant chacun tourner autour d'un axe de satellite (parallèle à l'axe X) par l'intermédiaire d'un pivot précité, ayant tout ou partie de ses caractéristiques.

Il est aussi prévu que ce train d'engrenages puisse comporter en outre des moyens d'amenée d'huile au niveau d'une interface entre un dit pignon satellite et le pivot considéré. Au moins une surface circonférentielle radialement extérieure d'un dit pivot présentera alors de préférence une fente d'alimentation en un liquide lubrifiant, ladite largeur (l) et/ou profondeur (P) étant minimum dans une zone latérale du pivot adjacente à la fente et située angulairement du côté opposé à celui vers lequel le lubrifiant coule (sens S ci-après) sur la surface extérieure quand le train d'engrenages est opérationnel, donc peut tourner.

Ainsi, on aura enlevé localement de la matière dans les zones où le lubrifiant chauffe beaucoup. Un tel train d'engrenages est performant en ce qu'il associe une performance dans l'alignement attendu des pièces concernées et une limitation des points chauds néfastes tant mécaniquement pour la structure des pièces que pour le lubrifiant.

Quant à la turbomachine précitée, concernée aussi en tant que telle, elle pourra comprendre un tel train d'engrenages, en particulier un train d'engrenages épicycloïdal, dont le pignon central pourra entourer et être solidaire en rotation d'un arbre du compresseur de la turbomachine.

Et en particulier, il pourra s'agir d'un cas dans lequel la couronne extérieure sera solidaire d'un carter ou d'une virole annulaire statique du compresseur basse pression.

Ainsi, l'invention est en particulier applicable à un train d'engrenage, tel qu'un train d'engrenage épicycloïdal dans lequel la couronne extérieure est fixe. Dans ce cas, le train d'engrenages peut être qualifié de réducteur puisque la vitesse de sortie, c'est-à-dire celle du porte-satellites est plus faible que la vitesse d'entrée, c'est-à-dire celle de l'arbre d'entrainement en rotation du pignon central.

Le porte-satellites peut par exemple être alors relié à une roue de soufflante amont de la turbomachine dont la vitesse est ainsi inférieure à la vitesse de l'arbre du compresseur.

Autre aspect encore sur lequel l'invention est intervenue : le procédé de réalisation d'un pivot à palier lisse.

En effet, il n'a à la connaissance des inventeurs jusqu'à présent jamais été défini de méthode permettant d'obtenir une bonne évacuation de calories, voire un compromis favorable entre cette évacuation et une portée toujours efficacement guidée.

C'est ainsi qu'il est ici proposé un procédé pour réaliser le pivot ci-avant évoqué avec sa surface circonférentielle extérieure présentant, comme précité, une fente d'alimentation en un liquide lubrifiant, de sorte que le liquide coule sur un côté circonférentiel de ladite surface circonférentielle extérieure quand il sort de la fente d'alimentation, dans lequel procédé :
- on détermine par un modèle TEHD des champs de température du pivot au moins à l'endroit de l'une au moins des parties latérales en porte-à-faux,
- on identifie à cet endroit au moins une zone que le modèle TEHD indique comme la zone de la ou des températures les plus élevées, puis
- on créé à l'endroit de ladite zone un évidement dans ladite au moins une partie latérale en porte-à-faux.

Cette manière d'opérer est rapide, simple et fiable.

Il est précisé que la méthode thermo-hydrodynamique dans le cadre de la lubrification, notée THD, consiste à déterminer les champs de température dans le fluide lubrifiant mais aussi dans les solides constituant le contact en liaison avec le champ de pression hydrodynamique dans le film qui lubrifie. Pour cela, à l'équation de Reynolds dont le paramètre principal est la pression sont associées deux équations supplémentaires : l'équation de l'énergie qui va permettre de déterminer la température en tout point du fluide, et l'équation de Fourrier qui permettra de déterminer la température dans les solides (arbre, bielle, coussinet, etc.). Le modèle est dit thermo-élasto-hydrodynamique, noté TEHD, lorsque les déformations élastiques et thermo-élastiques sont prises en compte en plus des phénomènes purement thermiques dans la résolution globale du problème. Il va de soi que les déformations thermiques des solides ne peuvent être prises en compte que si l'on connaît les températures dans les solides.

L'invention sera si nécessaire encore mieux comprise et d'autres détails, caractéristiques et avantages de l'invention pourront apparaître à la lecture de la description suivante faite à titre d'exemple non limitatif en référence aux dessins annexés dans lesquels :
- la figure 1 est un schéma de face d'un train d'engrenages,
- la figure 2 est un schéma cinématique d'un train épicycloïdal,
- la figure 3 est une vue en coupe locale du palier lisse,
- la figure 4 est un schéma longitudinal d'une turbomachine,
- la figure 5 est une perspective d'un pivot de l'art antérieur,
- la figure 6 est une coupe axiale selon VI-VI de la figure 7,
- les figures 7,8 sont deux modes possibles de réalisation d'un pivot selon l'invention,
- la figure 9 est un schéma de montage de pivots dans une configuration épicycloïdale,
- la figure 10 est un schéma de montage de pivots dans une configuration planétaire, et
- sur la figure 11 sont comparées deux solutions d'engrenages, en haut épicycloïdale, en bas à planétaire.

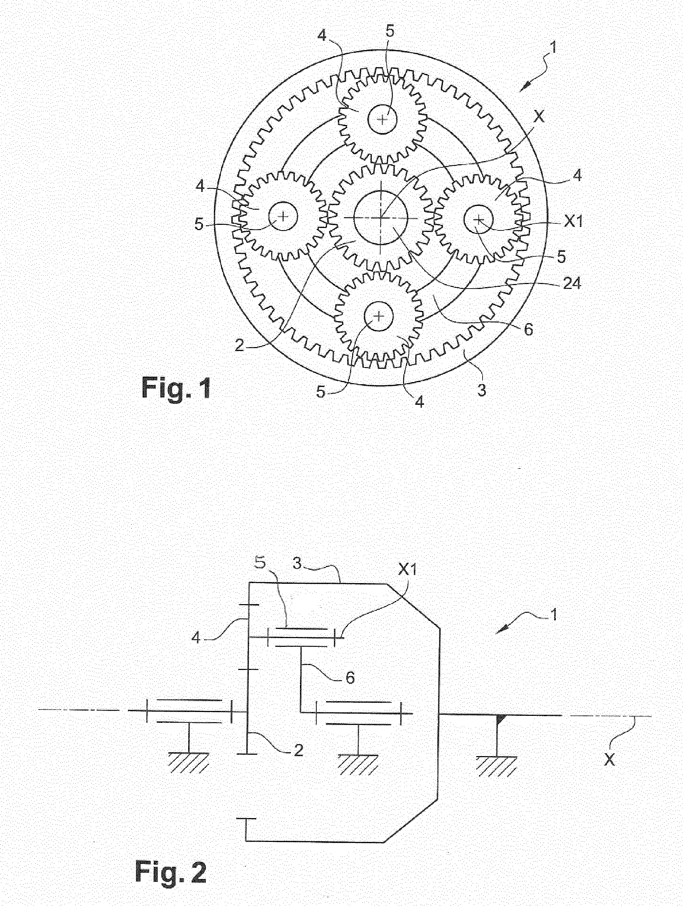

Ci-après, les termes « réducteur », « réducteur à train d'engrenages » et « train d'engrenages » couvrent la même chose. D'ailleurs, ils portent la même référence, 1. Les figures 1 et 2 illustrent schématiquement la structure d'un réducteur à train d'engrenages 1 sur laquelle l'invention peut s'appliquer. Le réducteur 1 comporte classiquement un planétaire interne 2 (également appelé soleil ou solaire) et un planétaire externe 3 (également appelé couronne extérieure), les deux planétaires étant coaxiaux. Le planétaire interne, ou pignon central 2 peut être mobile en rotation autour de son axe X, le planétaire externe, ou couronne extérieure, 3 pouvant être fixe, ou l'inverse fixe. Le train d'engrenages 1 comporte en outre des satellites, ou pignons satellites 4 montés de façon mobile en rotation sur des pivots 5 d'un porte-satellites 6. Chaque satellite 4 engrène à la fois avec le planétaire interne 2 et avec le planétaire externe 3. Le porte-satellites 6 est fixe ou pivotant autour de l'axe X du planétaire interne 2 et du planétaire externe 3. L'entrée peut être formée par le planétaire interne 2 et la sortie formée par le porte-satellites 6.

Le porte-satellites 6 peut être couplé en rotation à une hélice (dans le cas d'un turbopropulseur) ou à une roue de soufflante (dans le cas d'un turboréacteur).

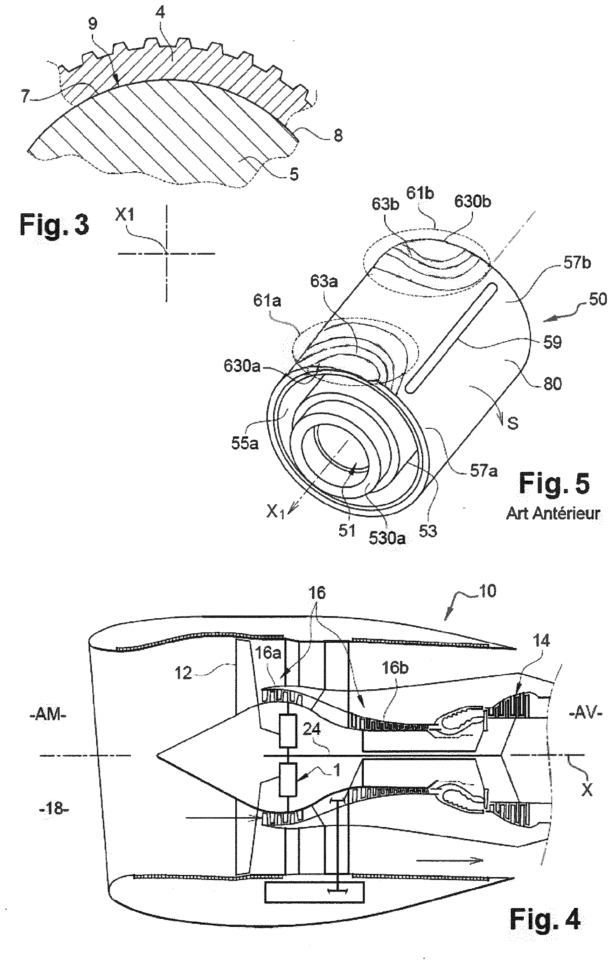

Dans une turbomachine 10 à gaz pour aéronef, des trains d'engrenages 1 sont notamment utilisés en tant que réducteur de vitesse pour réduire la vitesse de rotation d'un rotor, tel qu'une soufflante 12 figure 4, indépendamment de la vitesse de rotation d'au moins une turbine 14 couplée axialement en aval à au moins un compresseur 16 dont la turbomachine est aussi équipée. A partir de l'entrée d'air 18 frontale, la soufflante 12, puis notamment le compresseur 16 reçoivent de l'air.

Le pignon central, ou planétaire interne, 2 entoure et est alors solidaire en rotation de l'arbre 24 du compresseur 16 ; voir exemple figures 1,4. Le train d'engrenages 1 peut en particulier être monté dans une enceinte annulaire formée radialement à l'intérieur d'un compresseur basse pression 16a agencé en aval de la roue de soufflante 12 et en amont (AM) d'un compresseur haute pression 16b.

Comme cela est visible en considérant les figures 1-3, chaque satellite 4 comporte une surface interne cylindrique 7 montée pivotante autour d'une surface cylindrique 8 (surface extérieure de portée) du pivot 5 correspondant du porte-satellites 6, de façon à former un palier lisse.

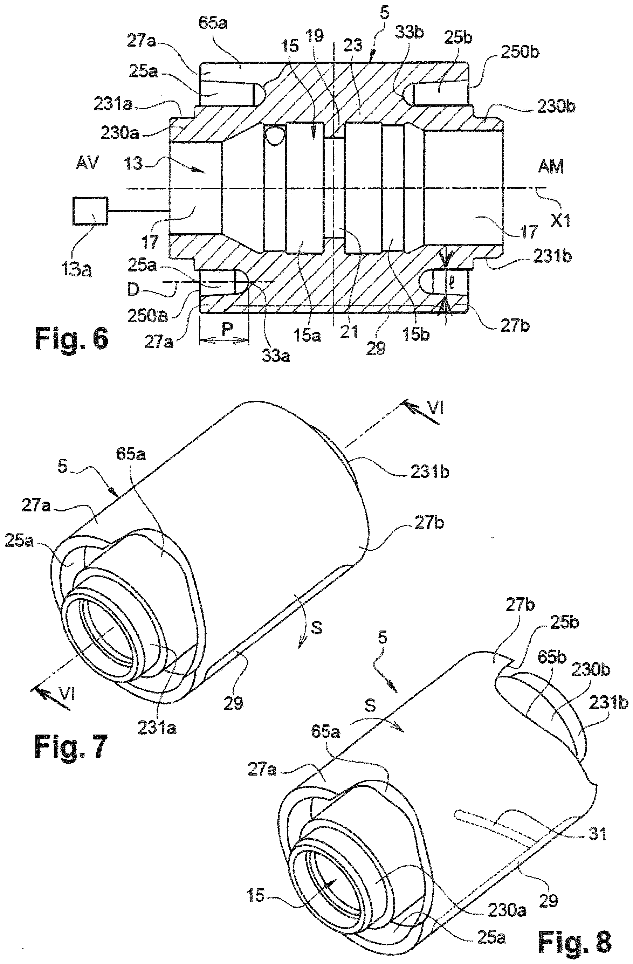

Il est donc nécessaire d'alimenter en huile l'interface 9 entre ces deux surfaces cylindriques 7, 8. Pour cela, comme illustré figure 6, le train d'engrenages 1 comporte des moyens 13 d'amenée de lubrifiant relié à une source de lubrifiant 13a et comportant une chambre 15 (51 figure 5), appelée aussi passage axial, s'étendant sensiblement selon l'axe X1 du pivot 5 concerné. L'une au moins des extrémités 17 de la chambre 15 est raccordée à un canal d'entrée d'huile. Si une seule des extrémités 17 forme une arrivée d'huile, l'autre extrémité est bouchée. La chambre 15 est globalement cylindrique et comporte plus particulièrement deux parties 15a, 15b (voir figure 6) séparées par une cloison médiane 19 s'étendant radialement. Les extrémités latérales 17 de la chambre 15 comportent des passages axiaux de plus faible diamètre que la chambre 15, dont l'un au moins forme une entrée d'huile, comme indiqué précédemment. La cloison médiane 19 est traversée par un orifice 21 faisant communiquer les parties 15a, 15b de la chambre 15. Sur la figure 5, on voit un pivot conventionnel 50 qui, comme ceux 5 conformes à l'invention (voir figures 6-9), présente une surface (sensiblement) cylindrique externe (repérée 80 pour le pivot 50 et 8 pour le pivot 5) d'axe X1, adaptée à former un palier lisse avec la surface (sensiblement) cylindrique interne (7 figure 3) du pignon satellite 4 d'axe X1 concerné.

Chaque pivot resp. (respectivement) 5,50 présente une partie formant un fût radialement central, resp. 23,53, s'étendant autour du passage axial resp. 15,51. C'est autour de l'axe X1 que le pivot est adapté à tourner, dans le sens S imposé par son montage sur le réducteur. Chaque pivot présente en outre des rainures resp. 25a,25b,55a circonférentielles axialement opposées, ouvertes axialement (donc latéralement), procurant une souplesse au pivot (figure 5, on ne voit pas l'intérieur de l'autre extrémité du pivot, d'où le seul repère 55a mentionné). Ces rainures circonférentielles séparent radialement, de deux parties latérales resp. 27a,27b,57a,57b en porte-à-faux, deux parties extrêmes latérales resp. 230a,230b,55a (l'autre n'est pas visible figure 5), chacune à surface de portée périphérique 231a,231b axialement opposées du fût central.

Pour son alimentation en liquide lubrifiant, la surface circonférentielle, radialement extérieure resp. 8,80 présente un passage, tel qu'une fente, resp. 29,59 d'alimentation allongée parallèlement à l'axe X1. Cette fente communique avec un conduit radial (31, figure 8), lequel communique avec le passage axial précité (15,51), On considérera que le lubrifiant liquide qui sort du passage 29,59 coule sur la surface extérieure 8,80 dans le sens S des figures 5,7,8, quand le train épicycloïdal 1 fonctionne.

Sur le pivot 50 de l'art antérieur, il a été constaté un échauffement de sa surface active, donc de sa surface extérieure 80, en particulier circonférentiellement en amont du passage 59 ; zones 61a,61b figure 5.

Il s'avère que cette augmentation locale de la température est créée par l'air emprisonné dans la zone de souplesse (parties latérales 57a,57b en porte-à-faux). L'absence de matière limite la conduction de la chaleur et donc l'évacuation des calories. Pour rappel le creux de la zone de souplesse (rainures circonférentielles, telle que 55a) permet de diminuer la rigidité du pivot pour diminuer le désalignement entre la surface active du palier et ses portées. Or, le besoin de souplesse n'est pas nécessaire dans toutes les directions, il est donc possible de limiter l'étendue de la zone de souplesse dans les endroits à fort échauffement, afin d'augmenter la conduction et donc diminuer la température globalement sur la surface circonférentielle extérieure 8,80.

Ceci a amené les inventeurs à imaginer la méthodologie d'approche suivante à laquelle se rapporte d'ailleurs l'invention :
D'abord, ils ont déterminé par un modèle TEHD et sur un pivot tel que celui référencé 50, des champs de température tels que 63a,63b, ceci au moins à l'endroit de l'une au moins des parties latérales en porte-à-faux 57a,57b.

Ensuite, ils ont identifié à cet (ou à chaque) endroit, au moins une zone que le modèle TEHD a indiqué comme la (les) zone(s) de la ou des températures les plus élevées, comme en 630a,630b figure 5.

Puis ils sont intervenus sur le pivot 5 de l'invention pour qu'il soit fabriqué avec l'une au moins des parties 27a,27b latérales en porte-à-faux creusée par au moins un évidement 65a (figures 6-7), 65a,65b figure 8 ; voir partie 27a interrompue localement dans l'exemple commun des figures 6-7 et parties opposées interrompues localement 27a,27b dans l'autre exemple de la figure 8.

Une zone d'évidement s'avère être une zone peu chargée en contrainte. Il est en conséquence pas ou peu gênant que de tels creux existent. L'absence de matière n'affecte pas (notablement) le guidage par les portées.

Avant de détailler cette modification, on relèvera en outre figure 6, qu'à l'écart de l'évidement pour la rainure 25a, chaque rainure circonférentielle 25a,25b présente (ce qui pourrait aussi être constaté sur le pivot 50 de l'art antérieur ou celui de la figure 6) une extrémité latérale libre, resp. 250a,250b, située au niveau de l'extrémité libre correspondante de la partie latérale en porte-à-faux 27a ou 27b considérée.

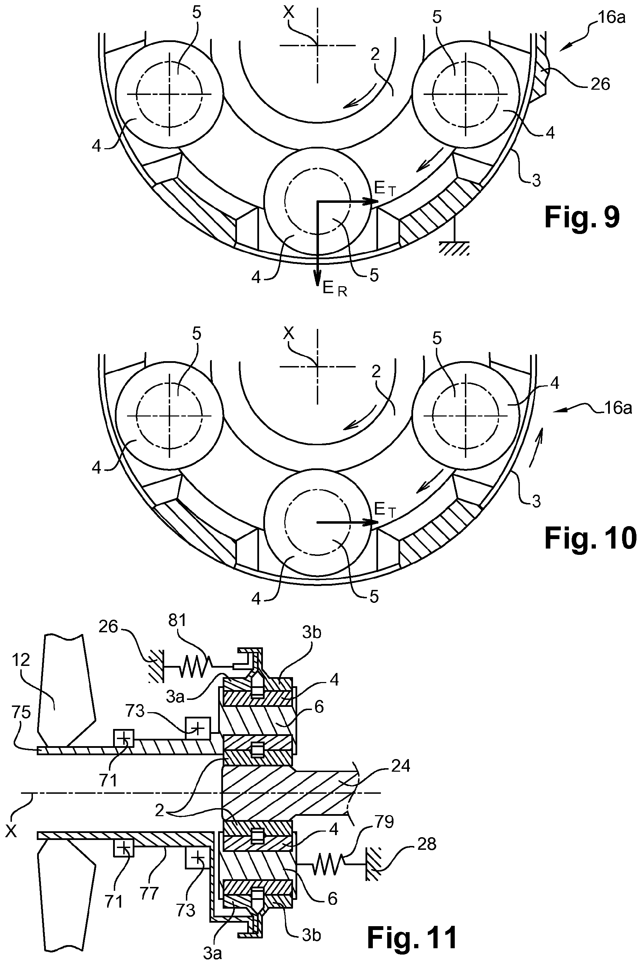

Chaque rainure circonférentielle présente en outre :
- au moins une profondeur P, dans une direction (telle que D figure 9 pour la rainure 25a) suivant laquelle la rainure circonférentielle s'étend vers l'intérieur du pivot, depuis l'extrémité latérale libre (telle que donc 250a) jusqu'à une extrémité de fond, telle que 33a (voir aussi repère 33b pour la rainure 25b),
- et au moins une largeur l (que l'on peut considérer comme une section, ou un diamètre suivant la forme de la rainure).

De façon approximative, la direction (telle que D) suivant laquelle s'étend une rainure circonférentielle est axiale (parallèle à l'axe X1). Plus finement, on notera une inclinaison radiale de quelques degrés vers l'intérieur.

Quoi qu'il en soit, la modification qui conduit à la solution de l'invention, comprend donc une fabrication du pivot 5 telle que l'on aura créé au moins un évidement 65a,65b à(aux) (l)'endroit(s) indiqué(s), via le modèle TEHD, comme la(les) zone(s), telles 630a et/ou 630b, de la ou des températures les plus élevées dans ladite au moins une partie latérale en porte-à-faux.

Dès lors qu'en fonctionnement, train épicycloïdal opérationnel (engrenages pouvant tourner), le lubrifiant est supposé couler dans le sens S, hors du passage 29, sur la surface circonférentielle radialement extérieure 8, ledit au moins un évidement 65a,65b sera favorablement adjacent à cette fente et alors situé angulairement du côté opposé à celui vers lequel le lubrifiant coule (sens S) en sortant du passage 29 ; voir deux exemples figures 7 et 8.

Afin de favoriser notamment encore les transferts thermiques et l'efficacité dans l'effet anti-désalignement, il est par ailleurs conseillé que le pivot précité soit monobloc, avec ses parties latérales en porte-à-faux 27a,27b et son fût central 23 en une seule pièce.

Dès lors que la(les) zone(s), telles 630a et/ou 630b, de températures les plus élevées sera(ont) probablement localisée(s), il est prévisible que, du côté latéral concerné de l'évidement 65a et/ou 65b, la partie latérale en porte-à-faux correspondante 27a et/ou 27b soit circonférentielle mais non annulaire, comme illustré figures 6-8. Ainsi, on pourra au mieux associer maîtrises des surchauffes et des alignements.

A cet égard, le ou chaque évidement 65a,65b s'étendra favorablement sur au moins 10% de la circonférence du pivot et/ou de ladite profondeur (P) de la rainure circonférentielle 25a,25b considérée.

Dans une première version, le pivot 5 pourra ne comprendre d'évidement 65a ou 65b que d'un côté axial du pivot, ici en extrémité, comme figure 7.

Il est toutefois plus probable que, comme dans une seconde version montrée figure 8, le pivot 5 comprenne au moins deux évidements 65a et 65b, des deux côtés axiaux du pivot.

Sur les figures 9 et 11 (en haut), on a de nouveau schématisé le cas d'un montage de pivots 5 dans une configuration épicycloïdale, donc dans un cas où le pignon central 2 est mobile, mais la couronne extérieure 3 fixe, solidaire d'un carter extérieur, ou d'une virole annulaire, statique, 26 du compresseur 16, en particulier du compresseur basse pression 16a; voir figure 11 en haut où une liaison à ressort 81 relie la virole annulaire 26 à l'une des demi-couronnes, ici 3b. Comme illustré, des efforts tant tangentiaux ET dus aux couples appliqués, que radiaux ER, dus à la force centrifuge, sont exercés sur chaque pivot 5.

Sur la figure 10, un autre cas d'application est schématisé, celui d'un montage de pivots 5 dans une configuration planétaire, donc dans un cas où tant le pignon central 2 que la couronne extérieure 3 sont mobiles en rotation autour de l'axe X du compresseur 16a, en particulier du compresseur basse pression. Comme illustré, des efforts tangentiaux ET, dus aux couples appliqués, sont exercés sur chaque pivot 5. Cette situation peut être celle d'un open-rotor ou d'une double soufflante.

Sur la figure 11 sont comparées des solutions à trains d'engrenages épicycloïdaux dans lesquelles :
- en haut, on est dans une solution à porte-satellites mobile et à couronne fixe,
- en bas, le train d'engrenage est tel que le porte-satellites 6 est fixe (vis-à-vis d'un carter, ou d'une virole annulaire, statique 28) et la couronne extérieure est mobile (solution dite aussi à train réducteur planétaire).

En liaison avec certaines figures précédentes, on y retrouve en commun un porte-satellites 6 porteur de satellites 4, un planétaire interne 2 et un planétaire externe, ici en deux demi-couronnes 3a,3b respectivement amont et aval vis-à-vis de l'axe de rotation X. Le planétaire interne 2 est en prise avec l'arbre axial 24, l'arbre du compresseur basse pression dans l'exemple. Des paliers 71,73 supportent et guident axialement la soufflante 12.

Dans la solution en haut, via un prolongement axial amont 75 supporté et guidé par les paliers 71,73, le porte-satellites 6 est en prise avec la soufflante 12 et un porte-couronne fixe est adjoint, lié ici à la demi-couronne 3a amont.

Dans la solution du bas, c'est le planétaire externe (demi-couronnes 3a,3b) qui, via un prolongement axial amont 77 supporté et guidé par les paliers 71,73, est en prise avec la soufflante 12. Le porte-satellites 6 est fixe (liaison à ressort 79 avec la virole annulaire, statique, 28).

## Revendications

1. Pivot (5) pour palier lisse de train d'engrenages, le pivot (5) présentant :
- une partie (23) formant un fût central, s'étendant autour d'un passage axial (15) du pivot (5) ayant un axe (X1), et
- des rainures circonférentielles (25a,25b) axialement opposées, ouvertes latéralement, qui séparent radialement, de deux parties latérales en porte-à-faux (27a,27b) du pivot (5), deux parties extrêmes latérales axialement opposées (230a,230b) du fût central (23),
**caractérisé en ce que** l'une au moins des parties latérales en porte-à-faux (27a,27b) est creusée par au moins un évidement (65a,65b).

2. Pivot (5) selon la revendication 1, qui est monobloc, avec son fût central (23) et ses parties latérales en porte-à-faux (27a,27b) en une seule pièce.

3. Pivot (5) selon l'une quelconque des revendications précédentes dans lequel, du côté latéral dudit au moins un évidement (65a,65b), ladite partie latérale en porte-à-faux (27a,27b) est circonférentielle mais ne s'étend que sur une partie de la circonférence.

4. Pivot (5) selon l'une quelconque des revendications précédentes dans lequel, du côté latéral dudit au moins un évidement (65a,65b):
- la rainure circonférentielle (25a,25b) présente, à l'écart dudit au moins un évidement (65a,65b), au moins une profondeur (P) dans une direction suivant laquelle la rainure circonférentielle (25a,25b) s'étend vers l'intérieur du pivot (5), depuis une extrémité latérale libre (250a,250b) de ladite partie latérale en porte-à-faux (27a,27b), jusqu'à une extrémité de fond (33a) de ladite rainure circonférentielle (25a,25b), et
- le pivot (5) présentant une circonférence, ledit au moins un évidement (65a,65b) s'étend sur au moins 10% de la circonférence du pivot et/ou de ladite profondeur (P) de la rainure circonférentielle (25a,25b).

5. Pivot (5) selon l'une quelconque des revendications précédentes, **caractérisé en ce qu'**il comprend au moins deux évidements (65a,65b) creusés respectivement dans l'une et l'autre des deux parties latérales en porte-à-faux (27a,27b).

6. Train d'engrenages d'une turbomachine à gaz pour aéronef présentant un axe (X) de rotation, comprenant une couronne extérieure (3) et des pignons satellites (4) en prise avec un pignon central (2) et avec la couronne extérieure (3) et montés chacun libre en rotation sur un porte-satellites (6), les pignons satellites (4) pouvant chacun tourner, par l'intermédiaire du pivot (5) selon l'une quelconque des revendications 1 à 5, autour d'un axe de satellite parallèle audit axe (X) de rotation.

7. Ensemble comprenant :
- le train d'engrenages (1) selon la revendication 6, et,
- des moyens (13,13a) d'amenée d'huile, pour amener de l'huile au niveau d'une interface (9) entre un desdits pignons satellites (4) et ledit pivot (5), ledit pivot (5) présentant une surface circonférentielle radialement extérieure (8) qui présente un passage (29) d'alimentation en un liquide lubrifiant, ledit au moins un évidement (65a,65b) étant adjacent au passage (29) et étant situé angulairement du côté opposé à celui vers lequel le lubrifiant coule sur la surface circonférentielle radialement extérieure (8) quand le train d'engrenages (1) tourne.

8. Turbomachine à gaz pour aéronef comprenant ledit train d'engrenages selon la revendication 6 ou l'ensemble 7, dans lequel le pignon central (2) entoure et est solidaire en rotation d'un arbre (24) d'un compresseur de la turbomachine.

9. Turbomachine selon la revendication 8, dans laquelle la couronne extérieure (3) est solidaire d'un carter ou d'une virole annulaire statique (26) dudit compresseur qui est un compresseur basse pression (16a).

10. Turbomachine selon la revendication 8, dans laquelle le porte-satellites (6) est solidaire d'un carter ou d'une virole annulaire, statique (28).

11. Procédé de réalisation d'un pivot (5) selon l'une quelconque des revendications 1 à 5, une surface circonférentielle externe (8) dudit pivot (5) présentant une fente (29,59) d'alimentation en un liquide lubrifiant, de sorte que le liquide coule sur un côté circonférentiel de ladite surface circonférentielle extérieure (8) quand il sort de la fente d'alimentation (29,59), dans lequel procédé :
- on détermine par un modèle TEHD des champs de température du pivot (5) au moins à l'endroit de l'une au moins des parties latérales en porte-à-faux (27a,27b),
- on identifie à cet endroit au moins une zone (630a,630b) que le modèle TEHD indique comme la zone de la ou des températures les plus élevées, puis
- on créé à l'endroit de ladite zone (630a,630b) un évidement (65a,65b) dans ladite au moins une partie latérale en porte-à-faux (27a,27b).

## Patentansprüche

1. Drehzapfen (5) für Gleitlager eines Getriebezuges, wobei der Drehzapfen (5) aufweist:
- einen Abschnitt (23), der einen Mittelschaft bildet, welcher sich um einen axialen Durchgang (15) des Drehzapfens (5) mit einer Achse (X1) erstreckt, und
- axial gegenüberliegende, seitlich offene Umfangsnuten (25a, 25b), die zwei axial gegenüberliegende, seitliche Endabschnitte (230a, 230b) des Mittelschafts (23) von zwei freitragenden Seitenabschnitten (27a, 27b) des Drehzapfens (5) radial trennen,
**dadurch gekennzeichnet, dass** in zumindest einen der freitragenden Seitenabschnitte (27a, 27b) zumindest eine Ausnehmung (65a, 65b) eingebracht ist.

2. Drehzapfen (5) nach Anspruch 1,
wobei er einstückig ausgeführt ist und sein Mittelschaft (23) und seine freitragenden Seitenabschnitte (27a, 27b) aus einem Stück bestehen.

3. Drehzapfen (5) nach einem der vorhergehenden Ansprüche,
wobei auf der Seite seitlich der zumindest einen Ausnehmung (65a, 65b) der freitragende Seitenabschnitt (27a, 27b) in Umfangsrichtung verläuft, sich jedoch nur über einen Teil des Umfangs erstreckt.

4. Drehzapfen (5) nach einem der vorhergehenden Ansprüche,
wobei auf der Seite seitlich der zumindest einen Ausnehmung (65a, 65b)
- die Umfangsnut (25a, 25b) beabstandet von der zumindest einen Ausnehmung (65a, 65b) zumindest eine Tiefe (P) in einer Richtung, in der sich die Umfangsnut (25a, 25b) zum Inneren des Drehzapfens (5) hin erstreckt, von einem freien seitlichen Ende (250a, 250b) des freitragenden Seitenabschnitts (27a, 27b) bis zu einem Bodenende (33a) der Umfangsnut (25a, 25b) aufweist, und
- der Drehzapfen (5) einen Umfang aufweist und dabei die zumindest eine Ausnehmung (65a, 65b) sich über zumindest 10% des Umfangs des Drehzapfens und/oder der Tiefe (P) der Umfangsnut (25a, 25b) erstreckt.

5. Drehzapfen (5) nach einem der vorhergehenden Ansprüche,
**dadurch gekennzeichnet, dass** er zumindest zwei Ausnehmungen (65a, 65b) aufweist, die jeweils in den einen bzw. den anderen der beiden freitragenden Seitenabschnitte (27a, 27b) eingebracht sind.

6. Getriebezug eines Gasturbotriebwerks für ein Luftfahrzeug mit einer Drehachse (X), enthaltend ein äußeres Hohlrad (3) und Planetenräder (4), die mit einem Sonnenrad (2) und mit dem äußeren Hohlrad (3) in Eingriff stehen und jeweils frei drehbar auf einem Planetenradträger (6) gelagert sind, wobei die Planetenräder (4) jeweils um eine parallel zur Drehachse (X) verlaufende Planetenachse mittels eines Drehzapfens (5) nach einem der Ansprüche 1 bis 5 drehbar sind.

7. Anordnung, enthaltend:
- den Getriebezug (1) nach Anspruch 6 und
- Ölzuführmittel (13, 13a) zum Zuführen von Öl an eine Schnittstelle (9) zwischen einem der Planetenräder (4) und dem Drehzapfen (5),
wobei der Drehzapfen (5) eine radial äußere Umfangsfläche (8) aufweist, die einen Durchgang (29) zum Zuführen einer Schmierflüssigkeit aufweist, wobei die zumindest eine Ausnehmung (65a, 65b) an den Durchgang (29) angrenzt und winkelmäßig auf der Seite angeordnet ist, die derjenigen gegenüberliegt, zu der die Schmierflüssigkeit auf der radial äußeren Umfangsfläche (8) fließt, wenn sich der Getriebezug (1) dreht.

8. Gasturbotriebwerk für ein Luftfahrzeug mit dem Getriebezug nach Anspruch 6 oder der Anordnung nach Anspruch 7,
wobei das Sonnenrad (2) eine Welle (24) eines Verdichters des Turbotriebwerks umgibt und drehfest mit ihr verbunden ist.

9. Turbotriebwerk nach Anspruch 8,
wobei das äußere Hohlrad (3) fest mit einem Gehäuse oder einem statischen Mantelring (26) des Verdichters verbunden ist, bei dem es sich um einen Niederdruckverdichter (16a) handelt.

10. Turbotriebwerk nach Anspruch 8,
wobei der Planetenradträger (6) fest mit einem Gehäuse oder einem statischen Mantelring (28) verbunden ist.

11. Verfahren zur Herstellung eines Drehzapfens (5) nach einem der Ansprüche 1 bis 5, wobei eine äußere Umfangsfläche (8) des Drehzapfens einen Schlitz (29, 59) zum Zuführen einer Schmierflüssigkeit aufweist, so dass die Flüssigkeit auf eine Umfangsseite der äußeren Umfangsfläche (8) fließt, wenn sie aus dem Zuführschlitz (29, 59) austritt,
wobei bei dem Verfahren
- durch ein TEHD-Modell Temperaturfelder des Drehzapfens (5) zumindest an der Stelle von zumindest einem der freitragenden Seitenabschnitte (27a, 27b) bestimmt werden,
- an dieser Stelle zumindest ein Bereich (630a, 630b) festgelegt wird, den das TEHD-Modell als den Bereich mit der bzw. den höchsten Temperaturen angibt, und dann
- an der Stelle dieses Bereichs (630a, 630b) eine Ausnehmung (65a, 65b) in den zumindest einen freitragenden Seitenabschnitt (27a, 27b) eingebracht wird.

## Claims

1. A pivot pin (5) for a planetary gear sliding bearing, the pivot pin (5) having:
- a portion (23) forming a central shank extending around an axial passage (15) of the pivot pin (5) having an axis (X1), and
- axially opposed circumferential grooves (25a,25b), which are open laterally and which radially separate two axially opposed lateral end portions (230a,230b) of the central shank (23) from two axially opposite lateral cantilevered portions (27a,27b) of the pivot pin,
**characterised in that** at least one of the cantilevered lateral portions is hollowed out by at least one recess (65a,65b).

2. A pivot pin (5) according to claim 1, which is in one piece, with its central shank (23) and its cantilevered lateral portions (27a,27b) being in one piece.

3. A pivot pin (5) according to any one of the preceding claims, wherein, on the lateral side of said at least one recess (65a,65b), said lateral cantilevered portion (27a,27b) is circumferential but extends over a part of the circumference, only.

4. A pivot pin (5) according to any one of the preceding claims, wherein, on the lateral side of said at least one recess (65a,65b):
- the circumferential groove (25a,25b) has, away from said at least one recess (65a,65b), at least one depth (P) in a direction in which the circumferential groove (25a,25b) extends towards the inside of the pivot pin, from a free lateral end (250a,250b) of said cantilevered lateral portion (27a,27b) to a bottom end (33a) of said circumferential groove (25a,25b), and
- the pivot pin (5) having a circumference, said at least one recess (65a,65b) extends over at least 10% of the circumference of the pivot pin and/or of said depth (P) of the circumferential groove (25a,25b).

5. A pivot pin (5) according to any one of the preceding claims, **characterized in that** it comprises at least two said recesses (65a,65b) hollowed out respectively in one and the other of the two cantilevered lateral portions (27a,27b).

6. A planetary gear train of an aircraft gas turbine engine having an axis of rotation (X), comprising an outer ring gear (3) and planet pinions (4) meshing with a central pinion (2) and with the outer ring gear (3), the planet pinions (4) being each mounted for free rotation on a planet carrier (6), each planet pinion (4) being able to rotate about a planet axis parallel to said axis of rotation (X), via a pivot pin (5) according to any one of claims 1 to 5.

7. An assembly comprising:
- the planetary gear train (1) according to claim 6, and
- means (13,13a) for supplying oil at an interface (9) between one of said planet pinions (4) and the pivot pin (5), said pivot pin (5) having a radially outer circumferential surface (8) which has a passage (29) for supplying a lubricating liquid, said at least one recess (65a,65b) being adjacent to the passage (29) and being angularly located on the side opposite that towards which the lubricant flows on the radially outer circumferential surface (8) when the gear train is allowed to rotate.

8. An aircraft gas turbine engine comprising said planetary gear train according to claim 6 or the assembly according to claim 7, wherein the central pinion (2) surrounds and is solidarized in rotation with a shaft (24) of a compressor of the turbine engine.

9. A turbine engine according to claim 8, wherein the outer ring (3) is solidarized with a casing or static annular shell (26) of said compressor which is a low-pressure compressor (16a).

10. A turbine engine according to claim 8, wherein the planet carrier (6) is solidarized with a casing or a annular shell (28), static.

11. A method for making a pivot pin (5) according to any one of claims 1 to 5, an outer circumferential surface (8) of said pivot pin (5) having a slot (29,59) for supplying a lubricating liquid, so that the liquid flows on a circumferential side of said outer circumferential surface (8) when it exits the supply slot (29,59), wherein:
- temperature fields of the pivot pin are determined by a TEHD model at least at the location of at least one of the cantilevered lateral portions (27a,27b),
- at least one zone (630a,630b) is identified at this location that the TEHD model indicates as the highest temperature zone(s), and then
- a recess (65a,65b) is created at the location of said zone (630a,630b) in said at least one cantilevered lateral portion (27a,27b).
